# FASCICULE DE BREVET EUROPEEN

(11) **EP 2 214 933 B1**
(45) Date de publication et mention de la délivrance du brevet: **13.04.2011**
(21) Numéro de dépôt: 08858032.9
(22) Date de dépôt: 02.12.2008
(51) Int. Cl.: B60R 16/02, B60N 2/02, B60N 2/44, H01R 13/46, H02G 11/00

(54) **RACCORDEMENT ELECTRIQUE D'UN ELEMENT D'AMENAGEMENT INTERIEUR D'UN VEHICULE AUTOMOBILE**
ELEKTRISCHER ANSCHLUSS FÜR EIN INNENMONTAGELEMENT FÜR EIN KRAFTFAHRZEUG
ELECTRIC CONNECTION FOR AN INTERIOR FITTING MEMBER FOR AN AUTOMOBILE

(30) Priorité: 03.12.2007 FR 0759496
(43) Date de publication de la demande: 11.08.2010
(73) Titulaire: Renault s.a.s., 92100 Boulogne-Billancourt (FR)
(72) Inventeur: JOUENARD, Eric, 78370 Plaisir (FR); LARVOR, Philippe, 78960 Voisins-le-Bretonneux (FR)
(74) Mandataire: Rougemont, Bernard
(86) Numéro de dépôt international: PCT/EP2008/066637
(87) Numéro de publication internationale: WO 2009/071545

(56) Documents cités:
- EP-A- 1 731 373
- US-B1- 6 663 157

## Description

La présente invention se rapporte à un dispositif pour la connexion électrique d'éléments d'aménagement intérieur d'un véhicule automobile, en particulier des éléments électriques d'un siège, par exemple pour la connexion d'un moteur de réglage de la position verticale ou longitudinale dudit siège, ou pour la commande d'un coussin de sécurité dont le gonflage peut, par exemple, être déclenché par un détonateur pyrotechnique à commande électrique.

D'une manière générale, peu d'aménagements particuliers sont mis en place pour la réalisation de telles connexions : au moins un faisceau électrique provenant du plancher, protégé par une gaine renforcée, se termine, le plus souvent, par un connecteur faisant saillie sur ledit plancher, dans une zone généralement située sous ledit siège ; au moins un faisceau électrique complémentaire, provenant dudit siège à raccorder, étant également placé dans une gaine protectrice terminée par un connecteur placé dans une zone dudit siège permettant la connexion (voir, à titre d'exemple non exhaustif, le document EP1093959).

Un tel aménagement n'offre toutefois pas une protection satisfaisante desdits faisceaux électriques, ceux-ci pouvant être déconnectés, endommagés, voire rompus, en particulier par des objets glissés sous le siège par l'utilisateur du véhicule. De plus, les sollicitations mécaniques parfois importantes auxquelles sont soumis lesdits dispositifs de connexion lors, notamment, des déplacements dudit siège, sont une source complémentaire de mauvais contacts ou déconnexions desdits connecteurs, ainsi que les risques liés à des chutes accidentelles de liquide, par exemple.

Le document EP1138555 propose la mise en place d'une gaine articulée destinée à protéger lesdits faisceaux électriques lors des déplacements du siège avant d'un véhicule automobile. Ladite gaine est sensiblement placée sous ledit siège et, à l'une de ses extrémités, raccordée à une platine de connexion fixée sur le plancher du véhicule et accueillant le faisceau électrique provenant dudit plancher, et, à son autre extrémité, fixée à un élément d'armature de l'assise dudit siège. Si un tel dispositif offre une protection supplémentaire des faisceaux électriques, il ne garantit toutefois pas, du fait de sa position sous le siège, la protection contre les endommagements potentiels liés à la présence d'objets sous ledit siège ou contre les autres sources de mauvais contacts évoquées plus haut.

Le document US 6663157 décrit les caractéristiques du préambule de la revendication 1.

Le document FR 2 883 423 propose un dispositif de connexion comportant un soubassement rigide et un carter d'habillage dudit soubassement rigide. Selon la publication, le dispositif de connexion met en oeuvre, d'une part, au moins un faisceau électrique en provenance du plancher dudit véhicule, terminé par un connecteur approprié, et, d'autre part, au moins un faisceau électrique en provenance dudit siège, également terminé par un connecteur approprié, la connexion s'effectuant au moyen d'au moins un connecteur approprié destiné à coopérer respectivement avec lesdits connecteurs appropriés terminant lesdits faisceaux électriques. Avantageusement, ledit connecteur est placé sur une platine de connexion insérée entre une face externe dudit soubassement rigide orientée vers la portière dudit véhicule près de laquelle ledit siège est placé et la face interne dudit carter d'habillage lui correspondant.

Cependant, même si un tel carter offre une ouverture dont la forme et les dimensions sont appropriées pour le passage de la main d'un opérateur et permettent l'accès au connecteur et à la plaque de connexion, un opérateur ne peut pas visualiser le montage des connecteurs ensembles et donc s'assurer que la connexion est bien effectuée, le visuel étant un moyen de vérification supplémentaire à une vérification manuelle de la connexion en aveugle. Par ailleurs, le fait de passer la main dans une ouverture étroite reste tout de même contraignant pour l'opérateur.

La présente invention a pour but de proposer un aménagement pour la connexion des éléments électriques du siège d'un véhicule automobile, dans lequel les connecteurs et faisceaux électriques sont protégés des agressions évoquées ci-dessus, ledit aménagement fournissant en outre la possibilité d'une connexion robuste, ainsi qu'un accès aisé pour les opérations de montage, de contrôle ou de maintenance offrant un moyen de vérification supplémentaire visuel.

L'invention atteint son but grâce à un dispositif pour la connexion des éléments électriques d'un siège d'un véhicule automobile, ledit siège comportant notamment un soubassement rigide comprenant deux supports de siège latéraux entre lesquels se trouve un élément rigide transversal, ledit dispositif de connexion mettant en oeuvre, d'une part, au moins un premier faisceau électrique en provenance du plancher dudit véhicule, terminé par un premier connecteur approprié, et, d'autre part, au moins un second faisceau électrique en provenance dudit siège, également terminé par un second connecteur approprié, la connexion s'effectuant en connectant ensemble les premier et second connecteurs appropriés, un desdits connecteurs appropriés étant placé sur une platine de connexion réalisée à cet effet, caractérisé en ce que ladite platine de connexion comprend au moins un moyen de fixation amovible destiné à coopérer avec ledit élément rigide transversal, ledit élément transversal étant disposé à l'avant du soubassement, de manière à rendre la platine mobile entre une position libre dans laquelle elle est désolidarisée de l'élément transversal pour être visible par un opérateur et une position fixée sur l'élément transversal.

Avantageusement, l'invention peut également présenter une ou plusieurs des caractéristiques suivantes :
- ladite platine de connexion peut être mobile en rotation autour d'un axe sensiblement perpendiculaire à l'axe de l'élément rigide transversal,
- ladite platine peut comprendre deux extrémités, la première extrémité étant solidaire dudit axe de rotation et ledit axe étant soudé sur le tube transversal rigide,
- la seconde extrémité de la platine peut comporter une patte sensiblement perpendiculaire à une surface supérieure de la platine, ladite patte étant orientée vers le bas et comprenant au moins un moyen de fixation amovible apte à coopérer avec l'élément transversal,
- ledit moyen de fixation amovible peut être réalisé dans un matériau déformable élastiquement comprenant une ouverture appropriée pour sa mise en place sur ledit élément transversal rigide ou son retrait dudit élément transversal, ledit moyen de fixation amovible possédant des dimensions et une forme aptes à serrer l'élément transversal une fois la platine mise en place sur ledit élément transversal,
- ledit élément transversal peut être un tube et ledit moyen de fixation amovible correspondant de la platine peut être un anneau ouvert déformable élastiquement lors de sa mise en place sur ledit tube,
- le connecteur approprié placé de manière permanente sur la platine de connexion peut être celui correspondant au second faisceau électrique en provenance dudit siège.

L'invention concerne également un véhicule automobile équipé d'au moins un siège dont les éléments électriques sont connectés au moyen d'au moins un tel dispositif.

D'autres caractéristiques et avantages de l'invention apparaîtront clairement à la lecture de la description suivante, en liaison avec les figures annexées dans lesquelles :
- la figure 1 représente une vue en perspective de la platine selon l'invention comprenant deux connecteurs connectés l'un à l'autre, ladite platine étant dans sa position libre ou elle se trouve en rotation par rapport au tube rigide transversal, et
- la figure 2 représente une vue en perspective de la platine selon l'invention comprenant deux connecteurs connectés l'un à l'autre, ladite platine étant dans sa position fixée au tube rigide transversal.

Dans la description qui va suivre, des éléments identiques, similaires ou analogues seront désignés par les mêmes chiffres de référence.

Par ailleurs, pour l'ensemble des figures et dans l'ensemble de la description qui suit, une même notation désigne le même élément. De même, dans ce qui suit, on désignera par « supérieure » une face d'un élément orienté verticalement vers le haut du véhicule, c'est-à-dire vers le dessous de l'assise du siège, et par « inférieure » toute face opposée à ladite face « supérieure ». Enfin, on désignera les termes « avant » et « arrière » en référence au sens de marche classique d'un véhicule automobile.

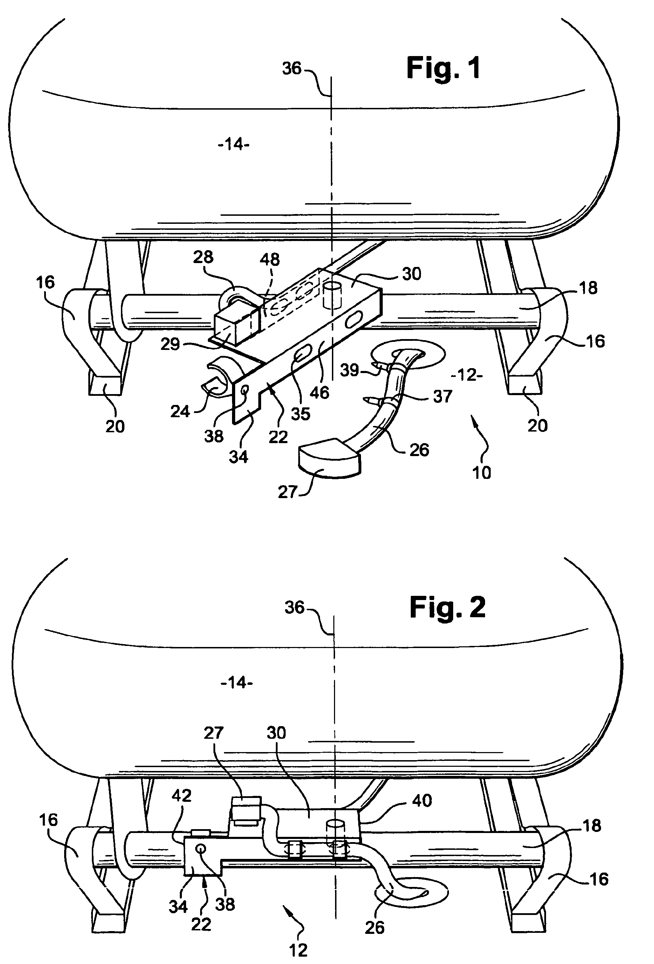

En référence aux figures, il est représenté des vues en perspective de la face avant d'un soubassement rigide 10 d'un siège 14 avant de véhicule automobile comportant deux supports latéraux 16 rigides entre lesquels se trouve un élément transversal rigide 18 fixé de manière rigide, par exemple, par soudage. Lesdits supports latéraux de sièges sont fixés sur au moins un rail 20 (illustré sur la figure 2) solidaire d'un plancher 12 dudit véhicule.

Afin d'effectuer le raccordement de l'ensemble des éléments électriques dudit siège, au moins un premier faisceau électrique 26 est issu dudit plancher 12 dudit véhicule, et équipé, à son extrémité libre débouchant dans l'habitable dudit véhicule, d'un premier connecteur approprié 27 et au moins un second faisceau électrique 28 complémentaire est issu dudit siège 14 et est équipé, à son extrémité libre, d'un connecteur approprié 29.

Selon le mode de réalisation de l'invention, une platine de connexion 22, dont les différentes parties seront détaillées ultérieurement, est placée grâce à au moins un moyen de fixation 24 approprié sur l'élément transversal rigide 18, qui est un tube de section circulaire, et accueille au moins un connecteur 27, 29, selon l'invention il s'agira du second connecteur 29 destiné à coopérer avec le premier connecteur approprié 27 terminant ledit au moins un faisceau électrique 26 provenant du plancher. Cette disposition de la platine sur une face avant d'un soubassement est particulièrement avantageuse car un opérateur aura un accès facilité pour la connexion. En effet, cette zone est spacieuse et n'est pas encombrée par des éléments du véhicule puisque en avant de ce soubassement se trouve traditionnellement le plancher apte à recevoir les pieds d'un passager assis sur un siège nécessitant une telle connexion. C'est ainsi une zone bien visible pour l'opérateur et rendant les manipulations aisée lors de la connexion. Par ailleurs, ce tube 18 est placé à une certaine hauteur du sol, ce qui évite ainsi tout risque de déconnexion, d'endommagement, voire de rupture, en particulier par des objets glissés sous le siège par l'utilisateur du véhicule. De plus, la hauteur de ce tube sur lequel vient se positionner la platine de connexion permet de se prémunir des sollicitations mécaniques parfois importantes auxquelles sont soumis lesdits dispositifs de connexion lors, notamment, des déplacements dudit siège, qui sont une source complémentaire de mauvais contacts ou déconnexions desdits connecteurs, ainsi que les risques liés à des chutes accidentelles, par exemple, de liquide.

Ainsi que le présente les figures, ladite platine 22 comporte une surface supérieure 30 comprenant les moyens de réceptions (non représentés sur les figures) du premier connecteur 27. Elle présente deux extrémités, la première extrémité 40, selon le mode de réalisation de l'invention, est percée pour recevoir un axe de rotation 36 soudé sur le tube 18 et la seconde extrémité 42 comporte un moyen d'indexage (non représenté) pour assurer son blocage sensiblement transversalement sur le tube 18. Ainsi, la position de la platine sera toujours compatible avec des éléments que l'on pourrait trouver sous l'assise du siège comme par exemple un tiroir sous siège, un chargeur de CD, un outil permettant la navigation, des moteurs électriques de translation. Le moyen d'indexage est un clip venant se fixer sur un élément latéral du siège.

La platine 22 est alors apte à passer d'une position libre par rapport au tube, dans laquelle le moyen de fixation est désolidarisé du tube, à une position fixée audit tube 18 par ledit moyen de fixation. Pour cela, la platine comporte un moyen de fixation 24 sur la deuxième extrémité 42 de la platine agencé sur une patte 34 qui est sensiblement perpendiculaire à une surface supérieure 30 de la platine comprenant les moyens de réceptions dudit connecteur approprié, ladite patte étant orientée vers le bas.

La platine comporte, en outre, deux rebords latéraux, un avant 46 et un arrière 48, sensiblement perpendiculaires à la surface inférieure de la platine et orientés vers cette même surface, chacun desdits rebords comprenant des orifices 35 de réception destinés à coopérer avec des doigts de blocage 39 se trouvant sur des anneaux de serrage 37 disposés sur les faisceaux électriques et encerclant lesdits faisceaux. Ainsi selon l'invention, le couplage de ces doigts avec les orifices permet de définir un chemin de faisceaux électriques pour chacun desdits au moins un faisceau électrique. Selon un exemple de mode de réalisation de l'invention, le premier faisceau électrique provenant du plancher 26 est solidarisé avec le rebord avant 46 et le second faisceau électrique provenant du siège 28 est solidarisé avec le rebord arrière 48. Ceci permet de renforcer la sécurisation de la connexion en évitant que les faisceaux soient libres sous le siège, ce qui peut provoquer des risques supplémentaires de déconnexion lors, par exemple, du déplacement du siège 14 sur ses rails 20.

La patte 34 comporte un orifice au travers duquel le moyen de fixation 24 amovible vient se solidariser à la platine. Selon un premier mode de réalisation, le moyen de fixation 24 comporte, par exemple, un doigt de blocage 38 apte à entrer en force dans l'orifice pour se solidariser avec la patte 34 de la platine 22. Selon un autre mode de réalisation, la platine 22 et le moyen de fixation 24 sont réalisés en une seule pièce par moulage. Le moyen de fixation 24 est disposé sensiblement au centre de la patte. Le moyen de fixation amovible 24 a sensiblement la forme d'une pince destinée à coopérer avec le tube 18. Plus précisément selon l'invention, dans le cas d'un élément transversale 18 tubulaire, il s'agira d'un anneau réalisé dans un matériau déformable élastiquement comprenant une ouverture appropriée pour la mise en place ou le retrait dudit tube transversal rigide. Selon l'invention, un opérateur pourra ainsi, pour connecter les deux connecteurs 27 et 29 : faire tourner la platine par rapport au tube 18 par premièrement un retrait en force de l'anneau et deuxièmement une rotation autour de l'axe 36, de manière que la platine devienne visible par un opérateur, connecter les connecteurs 27, 29 ensemble et faire pivoter en sens inverse la platine par rapport à précédemment, pour fixer la platine sur le tube par ouverture élastique de l'anneau. L'anneau revient ensuite dans une position de repos où il encercle et serre le tube 18. Ceci permet ainsi d'assurer un contact sécurisé des connecteurs 27, 29 en ce sens que l'opérateur a accès facilement à la platine et peut la faire pivoter facilement pour avoir accès à la zone de connexion. Il aura alors loisir de visualiser la connexion effectuée, la visualisation constituant un moyen de vérification supplémentaire à un moyen de vérification tactile que la connexion est bien réalisée.

Il convient de noter qu'un cache amovible (non représenté sur les figures) peut être positionné pour obturer l'avant du soubassement au niveau duquel se trouve le dispositif de connexion selon l'invention.

Selon l'invention d'autres connecteurs pourront être ajoutés sur cette platine suivant les besoins, par exemple un connecteur pour rendre mobile électriquement le siège.

Le dispositif selon l'invention permet donc une connexion très sécurisée, aisée, rapide et facile d'accès des éléments électriques du siège d'un véhicule automobile.

## Revendications

1. Dispositif pour la connexion des éléments électriques d'un siège (14) d'un véhicule automobile, ledit siège comportant notamment un soubassement (10) rigide comprenant deux supports de siège latéraux (16) entre lesquels se trouve un élément rigide transversal (18), ledit disposa de connexion mettant en oeuvre, d'une part, au moins un premier faisceau électrique (26) en provenance du plancher dudit véhicule, terminé par un premier connecteur approprié (27), et, d'autre part, au moins un second faisceau (électrique (28) en provenance dudit siège, également terminé par un second connecteur approprié (29), la connexion s'effectuant en connectant ensemble les premier (27) et second (29) connecteurs appropriés, un desdits connecteurs appropriés étant placé sur une platine (22) de connexion réalisée à cet effet, ladite platine de connexion comprend au moins un moyen de fixation amovible (24) coopérant avec ledit élément rigide transversal, **caractérisé en ce que** ledit élément transversal est disposé à l'avant du soubassement, rendant la platine mobile entre une positon libre par rapport au tube dans laquelle le moyen de fixation es désolidarisé du tube à une position fixée audit tube par le moyen de fixation.

2. Disposition selon la revendication 1, **caractérisé en ce que** ladite platine (22) de connexion est mobile en rotation autour d'un axe (36) sensiblement perpendiculaire à l'axe de l'élément rigide transversal (18).

3. Dispositif selon l'une des revendication 1 ou 2, **caractérisé en ce que** ladite platine comprend deux extrémités, la première extrémité (40) étant solidaire dudit are de rotation et ledit axe étant soudé sur le tube transversal rigide.

4. Dispositif selon la revendication 3, **caractérisé en ce que** la seconde extrémité (42) de la platine comporte une patte (34) sensiblement perpendiculaire à une surface supérieure (30) de la platine, ladite patte étant orientée vers le bas et comprenant au moins un moyen de fixation amovible (24) apte à coopérer avec l'élément transversal (18).

5. Dispositif selon l'une des revendications précédentes, **caractérisé en ce que** ledit moyen de fixation amovible (24) est réalisé dans un matériau déformable élastiquement comprenant une ouverture appropriée pour sa mise en place sur ledit élément transversal rigide (18) ou son retrait dudit élément transversal, ledit moyen de fixation amovible possédant des dimensions et une forme aptes à serrer l'élément transversal une fois la platine mise en place sur ledit élément transversal.

6. Dispositif selon l'une des revendications précédentes, **caractérisé en ce que** ledit élément transversal (18) est un tube et ledit moyen de fixation amovible (24) correspondant de la platine (22) est un anneau ouvert déformable élastiquement lors de sa mise en place sur ledit tube.

7. Dispositif selon l'une des revendications précédentes, **caractérisé en ce que** le connecteur approprié placé de manière permanente sur la platine de connexion (22) est celui correspondant au second faisceau électrique (28) en provenance dudit siège (14).

8. Véhicule automobile équipé d'au moins un siège (14) dont les éléments électriques sont connectés au moyen d'au moins un dispositif selon l'une quelconque des revendications 1 à 7.

## Claims

1. Device for connecting the electric elements of a seat (14) of a motor vehicle, said seat particularly comprising a rigid substructure (10) comprising two lateral seat supports (16) between which there is a transversal rigid element (18), said connection device employing, on the one hand, at least one first electric loom (26) originating from the floor of said vehicle, terminated by a first appropriate connector (27), and, on the other hand, at least one second electric loom (28) originating from said seat, also terminated by a second appropriate connector (29), the connection being made by connecting the first (27) and second (29) appropriate connectors together, one of said appropriate connectors being placed on a connection panel (22) provided for that purpose, said connection panel comprising at least one removable fixing means (24) cooperating with said transversal rigid element, **characterized in that** said transversal element is positioned at the front of the substructure, returning the mobile panel between a free position relative to the tube in which the fixing means is separated from the tube to a position fixed to said tube by the fixing means.

2. Device according to Claim 1, **characterized in that** said connection panel (22) is mobile in rotation about an axis (36) substantially perpendicular to the axis of the transversal rigid element (18).

3. Device according to one of Claims 1 or 2, **characterized in that** said panel comprises two ends, the first end (40) being securely attached to said rotation axis and said axis being welded to the rigid transversal tube.

4. Device according to Claim 3, **characterized in that** the second end (42) of the panel has a tab (34) substantially perpendicular to a top surface (30) of the panel, said tab being oriented downward and comprising at least one removable fixing means (24) able to cooperate with the transversal element (18).

5. Device according to one of the preceding claims, **characterized in that** said removable fixing means (24) is produced from an elastically deformable material comprising an appropriate opening for fitting it on said rigid transversal element (18) or removing it from said transversal element, said removable fixing means having dimensions and a shape suitable for gripping the transversal element once the panel has been fitted on said transversal element.

6. Device according to one of the preceding claims, **characterized in that** said transversal element (18) is a tube and said removable fixing means (24) corresponding to the panel (22) is an open ring that is elastically deformable when it is being fitted on said tube.

7. Device according to one of the preceding claims, **characterized in that** the appropriate connector placed permanently on the connection panel (22) is that corresponding to the second electric loom (28) originating from said seat (14).

8. Motor vehicle equipped with at least one seat (14), the electric elements of which are connected by means of at least one device according to any one of Claims 1 to 7.

## Patentansprüche

1. Vorrichtung für die Verbindung elektrischer Elemente eines Sitzes (14) eines Kraftfahrzeugs, wobei der Sitz insbesondere einen starren Unterbau (10) enthält, der zwei seitliche Sitzträger (16) aufweist, zwischen denen sich ein starres transversales Element (18) befindet, wobei die Verbindungsvorrichtung einerseits einen ersten Kabelbaum (26), der vom Boden des Fahrzeugs ausgeht und durch einen ersten geeigneten Verbinder (27) abgeschlossen ist, und andererseits wenigstens einen zweiten Kabelbaum (28), der von dem Sitz ausgeht und ebenfalls durch einen zweiten geeigneten Verbinder (29) abgeschlossen ist, verwendet, wobei die Verbindung durch Verbinden der Gesamtheit des ersten geeigneten Verbinders (27) und des zweiten geeigneten Verbinders (29) erfolgt, wobei einer der geeigneten Verbinder auf einer hierzu verwirklichten Anschlussplatine (22) angeordnet ist, wobei die Anschlussplatine wenigstens ein abnehmbares Befestigungsmittel (24) aufweist, das mit dem starren transversalen Element zusammenwirkt, **dadurch gekennzeichnet, dass** das transversale Element vor dem Unterbau angeordnet ist und die Platine zwischen einer freien Position in Bezug auf das Rohr, in der das Befestigungsmittel vom Rohr gelöst ist, und einer durch das Befestigungsmittel am Rohr befestigten Position beweglich macht.

2. Vorrichtung nach Anspruch 1, **dadurch gekennzeichnet, dass** die Anschlussplatine (22) um eine Achse (36), die zu der Achse des starren transversalen Elements (18) im Wesentlichen senkrecht ist, rotatorisch beweglich ist.

3. Vorrichtung nach einem der Ansprüche 1 oder 2, **dadurch gekennzeichnet, dass** die Platine zwei Enden aufweist, wobei das erste Ende (40) mit der Drehachse fest verbunden ist und die Achse an das transversale starre Rohr geschweißt ist.

4. Vorrichtung nach Anspruch 3, **dadurch gekennzeichnet, dass** das zweite Ende (42) der Platine einen Ansatz (34) aufweist, der zu einer oberen Oberfläche (30) der Platine im Wesentlichen senkrecht ist, wobei der Ansatz nach unten orientiert ist und wenigstens ein abnehmbares Befestigungsmittel (24) aufweist, das mit dem transversalen Element (18) zusammenwirken kann.

5. Vorrichtung nach einem der vorhergehenden Ansprüche, **dadurch gekennzeichnet, dass** das abnehmbare Befestigungsmittel (24) aus einem elastisch verformbaren Material verwirklicht ist und eine geeignete Öffnung aufweist, um es an dem transversalen starren Element (18) anzubringen oder von dem transversalen Element abzunehmen, wobei das abnehmbare Befestigungsmittel Abmessungen und eine Form besitzt, die geeignet sind, um das transversale Element festzuklemmen, sobald die Platine an dem transversalen Element angeordnet worden ist.

6. Vorrichtung nach einem der vorhergehenden Ansprüche, **dadurch gekennzeichnet, dass** das transversale Element (18) ein Rohr ist und das abnehmbare Befestigungsmittel (24), das der Platine (22) entspricht, ein offener Ring ist, der bei seiner Anordnung an dem Rohr elastisch verformbar ist.

7. Vorrichtung nach einem der vorhergehenden Ansprüche, **dadurch gekennzeichnet, dass** der geeignete Verbinder, der dauerhaft an der Anschlussplatine (22) angeordnet ist, jener ist, der dem zweiten Kabelbaum (28) entspricht, der von dem Sitz (14) ausgeht.

8. Kraftfahrzeug, das mit wenigstens einem Sitz (14) ausgerüstet ist, dessen elektrische Elemente mittels wenigstens einer Vorrichtung nach einem der Ansprüche 1-7 angeschlossen sind.
